# EUROPÄISCHE PATENTSCHRIFT

(11) **EP 0 558 963 B1**
(45) Veröffentlichungstag und Bekanntmachung des Hinweises auf die Patenterteilung: **01.10.1997**
(21) Anmeldenummer: 93102057.2
(22) Anmeldetag: 10.02.1993
(51) Int. Cl.: B60R 22/46, B60R 22/18

(54) **Linearantrieb für Fahrzeugrückhaltesysteme**
Linear pretensioning device for a restraint system in a vehicle
Dispositif tendeur linéaire pour un système de retenue dans un véhicule

(30) Priorität: 05.03.1992 DE 4206980
(43) Veröffentlichungstag der Anmeldung: 08.09.1993
(73) Patentinhaber: TRW Occupant Restraint Systems GmbH, 73553 Alfdorf (DE)
(72) Erfinder: Föhl, Artur, W-7060 Schorndorf (DE)
(74) Vertreter: Degwert, Hartmut, Dipl.-Phys.

(56) Entgegenhaltungen:
- DE-A- 3 407 379
- FR-A- 2 491 340
- GB-A- 2 217 181

## Beschreibung

Die Erfindung betrifft einen Linearantrieb für Fahrzeug-Rückhaltesysteme, mit einem pyrotechnischen Gasgenerator, einer durch die von diesem erzeugten Gase aktivierbaren Kolben/Zylinder-Einheit und einem Zugseil, das so an den Kolben der Kolben/Zylinder-Einheit angeschlossen ist, daß zwischen dem Kolben und dem Zugseil ein Kraftübertragungsweg geschaffen wird, der eine deformierbare Dämpfungseinhrichtung enthält, insbesondere für Gurtstraffer an einem Gurtaufroller.

Die Wirksamkeit von Gurtstraffern in verschiedenen Bauformen ist erwiesen. Jüngste Untersuchungen haben gezeigt, daß die Schutzwirkung des Sicherheitsgurtes nochmals gesteigert werden kann, wenn die Straffung mit im Vergleich zu herkömmlichen Gurtstraffern erhöhter Kraft erfolgt. Die Leistung eines Gurtstraffers kann gesteigert werden, indem der pyrotechnische Gasgenerator stärker dimensioniert wird. Außer dem Linearantrieb selbst müssen dann auch das Zugseil und der Mechanismus, über den die erhöhte Kraft auf das Gurtband übertragen wird, stärker dimensioniert werden, um den auftretenden Belastungen standzuhalten.

Bei einem aus der DE-C 3 407 397 bekannten Linearantrieb der eingangs genannten Art dient die Dämpfungseinrichtung ausschließlich dazu, hohe Spitzendrücke abzubauen, die generell erst auftreten, nachdem die durch einen ansteigenden Gasdruck gekennzeichnete Anfangsphase der Kolbenbewegung bereits abgeschlossen ist. Die Dämpfungseinrichtung dieses bekannten Linearantriebs ist demzufolge erst nach dieser Anfangsphase wirksam.

Der Erfindung liegt die Erkenntnis zugrunde, daß eine Erhöhung der Strafferleistung ohne oder zumindest ohne wesentliche Erhöhung der Leistung des Gasgenerators dadurch erreicht werden kann, daß die von diesem freigesetzte Energie besser ausgenutzt wird. Gemäß der Erfindung sind Kolben und Zugseil über eine Dämpfungseinrichtung miteinander gekoppelt, welche die vom Kolben auf das Zugseil in der Phase des Druckanstiegs der durch den Gasgenerator erzeugten Gase ausgeübte Kraft begrenzt und stetig, vorzugsweise progressiv, ansteigen läßt. Nach der herkömmlichen Vorstellung von der Wirkungsweise einer Kolben/Zylinder-Einheit mit pyrotechnischem Gasgenerator wird die erzielbare mechanische Leistung in erster Linie durch die am Kolben wirksame Axialkraft bestimmt, die durch die Beaufschlagung der Stirnfläche des Kolbens mit dem Gasdruck erzeugt wird. Es wird dabei von der Vorstellung ausgegangen, daß diese Kraft über die gesamte Wegstrecke des Kolbens im Zylinder zur Verfügung steht. Der Erfindung liegt die Erkenntnis zugrunde, daß diese Annahme unzutreffend ist. Der von verfügbaren Gasgeneratoren erzeugte Gasdruck steigt nach der Zündung des Gasgenerators zunächst steil an und erreicht bereits nach 1 ms oder weniger einen Maximalwert. Anschließend fällt der Druck wieder ab und hat etwa 3 ms nach der Zündung weniger als etwa 10% seines Maximalwertes. Der weitaus größte Teil der von dem Gasgenerator freigesetzten Energie steht also nur während eines Bruchteils der Zeit, die der Kolben für einen vollständigen Hub von beispielsweise 200 mm benötigt, zur Verfügung. Durch die erfindungsgemäße Maßnahme, wonach Kolben und Zugseil über eine Dämpfungsrichtung miteinander gekoppelt sind, wird die durch den Gasgenerator freigesetzte Energie optimal in eine Beschleunigung des Kolbens umgesetzt. Insbesondere wird erreicht, daß das Maximum der Kolbenbeschleunigung zumindest annähernd mit dem Maximum der Gasdruckkurve auf der Zeitachse zusammenfällt. Die Dämpfung sollte also während der gesamten Anfangsphase der Kolbenbewegung wirksam sein, in welcher der durch den Gasgenerator erzeugte Gasdruck ansteigt. In dieser Anfangsphase legt der Kolben eine vergleichsweise geringe Strecke von etwa 5 bis 15% des gesamten Kolbenhubes zurück. Bei einem Kolbenhub von 200 mm legt der Kolben beispielsweise in dieser Anfangsphase eine Wegstrecke von nur etwa 16 mm zurück. Der Erfindung liegt weiterhin die Erkenntnis zugrunde, daß ein Weg gefunden werden muß, um die durch den Gasgenerator freigesetzte Energie, die bei gängigen Ausführungen nur während etwa 2 bis 3 ms verfügbar ist, zu speichern, so daß die für die Gurtstraffung benötigte Kraft über den gesamten Hub des Gurtstraffers verfügbar bleibt. Es wurde gefunden, daß diese Speicherung nur auf mechanischem Wege erfolgen kann. Bei Verwendung eines Gurtstraffers, der am Gurtaufroller angeordnet ist und über einen Kupplungsmechanismus an der Gurtspule angreift, kann die Gurtspule mit dem darauf aufgewickelten Gurtband als Energiespeicher angesehen werden. Die Gurtspule muß also innerhalb von 1 bis 2 ms auf eine solche Drehzahl beschleunigt werden, daß in der anschließenden Phase, in welcher der Gasdruck nahezu zusammengebrochen ist, das Trägheitsmoment von Gurtspule und darauf aufgewickeltem Gurtband ausreicht, um über den gesamten Strafferhub die benötigte Kraft bereitzustellen. Das an der Gurtspule angreifende Drehmoment sollte nach der Zündung des Gasgenerators steil, aber nicht zu abrupt ansteigen. Durch die Dämpfungseinrichtung kann der optimale Verlauf des an der Gurtspule wirksam werdenden Drehmomentes eingestellt werden. Besonders günstig ist es, wenn die mittels der Dämpfungseinrichtung von dem Kolben auf das Zugseil übertragene Kraft während der Phase des Druckanstiegs progressiv mit der zurückgelegten Wegstrecke zunimmt.

Aus der DE-OS 23 04 878 ist an sich bereits ein gattungsgemäßer Linearantrieb bekannt gewesen, der einen Kolben aufweist, an dem eine Zugstange mit einer Kraftbegrenzungseinrichtung für die bei der Gurtstraffung wirkende Kraft angeschlossen ist. Eine bei diesem Linearantrieb erwünschte Kraftbegrenzung wird dadurch erreicht, daß bei Überschreitung einer vorbestimmten Grenzkraft ein Entlastungsventil nach Überwinden der Kraft einer Druckfeder geöffnet wird. Diese Druckfeder ist so dimensioniert, daß in der normalen Arbeitsphase des Linearantriebs das Entlastungsventil geschlossen bleibt. Demgegenüber soll aber gemäß der Erfindung die beim Straffervorgang auftretende Kraft nicht begrenzt werden, sondern die verfügbare Energie soll möglichst vollständig genutzt und in mechanische Antriebskraft umgesetzt werden, was in überraschender Weise mittels der Dämpfungseinrichtung erreicht wird.

Je nach Ausführung des Gasgenerators und nach Zusammensetzung seiner pyrotechnischen Ladung kann die Zeitspanne, in welcher der Gasdruck verfügbar ist, auch etwas länger als 2 bis 3 ms sein und der Abfall der Gasdruckkurve erfolgt weniger steil. In solchen Fällen leistet der Gasdruck auch während der Zwischenphase und Endphase der Kolbenbewegung einen Beitrag zur Antriebsleistung. Prinzipiell wird aber auch bei solchen Ausführungen der weitaus größte Teil der Energie unmittelbar nach Zündung innerhalb von 2 bis 3 ms freigesetzt, so daß anschlieeßend der größte Teil der Antriebsleistung von der mechanischen Energie aufgebracht werden muß, die in der Drehbewegung von Gurtspule und darauf befindlichem Gurtband gespeichert ist.

Als Dämpfungseinrichtung kommen grundsätzlich zwei Ausführungen in Betracht: Gemäß der ersten Ausführung ist die Dämpfungseinrichtung ein elastisch nachgiebiges Teil, das in den Kraftübertragungsweg zwischen Kolben und Zugseil eingefügt ist; gemäß der zweiten Ausführung ist die Dämpfungseinrichtung durch ein plastisch verformbares Teil gebildet, welches ebenfalls in den Weg der Kraftübertragung zwischen Kolben und Zugseil eingefügt ist. Verschiedene Ausführungsformen der Dämpfungseinrichtung sind in den Unteransprüchen angegeben.

Weitere Merkmale und Vorteile der Erfindung ergeben sich aus der folgenden Beschreibung und aus der Zeichnung, auf die Bezug genommen wird. In der Zeichnung zeigen:
- Fig. 1: ein Diagramm, das den Verlauf des Gasdrucks, der Kolbenbeschleunigung und des Kolbenweges in Abhängigkeit von der Zeit darstellt;
- Fig. 2: eine schematische Darstellung eines pyrotechnischen Linearantriebs für einen an einem Gurtaufroller angreifenden Gurtstraffer;
- Fig. 3: ein Diagramm, welches den gewünschten Verlauf der im Zugseil wirkenden Kraft in Abhängigkeit von der Wegstrecke in der Anfangsphase der Kolbenbewegung zeigt;
- Fig. 4: eine Schnittansicht einer ersten Ausführungsform eines Linearantriebs, der erfindungsgemäß mit einer Dämpfungseinrichtung zwischen Kolben und Zugseil versehen ist;
- Fig. 5a und 5b: jeweils einen Längsschnitt der Kolben/Zylinder-Einheit mit einer Dämpfungseinrichtung gemäß einer zweiten Ausführungsform;
- Fig. 6a und 6b: Schnittansichten analog den Fig. 5a und 5b, jedoch mit einer anderen Ausführungsform der Dämpfungseinrichtung;
- Fig. 7a und 7b: einen Längsschnitt und einen Querschnitt einer weiteren Ausführungsform, bei welcher die Kolben/Zylinder-Einheit zugleich einen Energiewandler bildet;
- Fig. 8a und 8b: Schnittansichten analog Fig. 7a und 7b, jedoch bei einer anderen Ausführungsform; und
- Fig. 9a und 9b: Schnittansichten analog den Fig. 7a bis 8b, jedoch bei einer weiteren Ausführungsform.

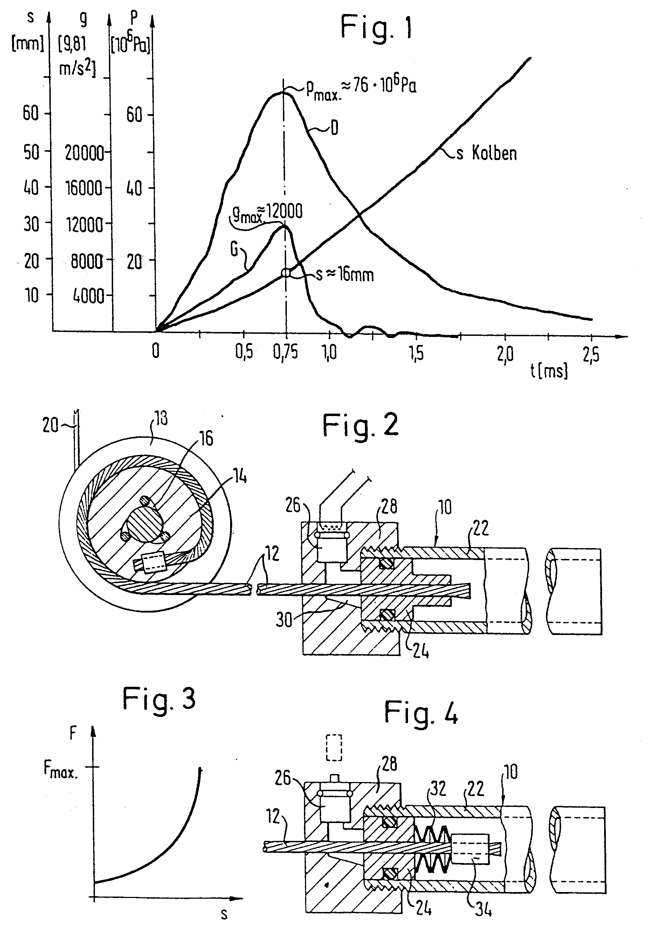

In dem Diagramm der Fig. 1 ist als Kurve D der Druckverlauf der von einem pyrotechnischen Gasgenerator, wie er für Gurtstraffer in Sicherheitsgurt-Rückhaltesystemen verwendet wird, erzeugten Gase in Abhängigkeit von der Zeit t aufgetragen. Die Fig. 2 zeigt schematisch einen solchen Gurtstraffer mit einem Kolben/Zylinder-Linearantrieb 10, der über ein Zugseil 12 am Umfang einer Seilscheibe 14 angreift, welche mittels eines Klemmrollen-Kupplungsmechanismus 16 an eine Gurtspule 18 eines Gurtaufrollers ankoppelbar ist, auf welcher das Gurtband 20 aufgespult ist. Der Linearantrieb 10 besteht aus einem Zylinder 22 und einem darin verschiebbar aufgenommenen Kolben 24, der an dem freien Ende des Zugseils 12 angreift und dessen Stirnfläche mit unter hohem Druck stehenden Gasen beaufschlagbar ist, die ein Gasgenerator 26 erzeugt, sobald er durch einen elektrischen oder mechanischen Zünder ausgelöst wird. Bei der in Fig. 2 gezeigten, herkömmlichen Ausbildung des Gurtstraffers ist der Kolben 24 auf dem Ende des Zugseils 12 fest verpreßt.

Der Gasgenerator 26 ist in eine Bohrung eines Gehäuseblocks 28 eingesetzt, in der ein gekrümmter Kanal 30 ausgebildet ist, durch den die von dem Gasgenerator 26 bei dessen Zündung erzeugten Gase zur Stirnfläche des Kolbens 24 geführt werden. Wie aus Fig. 1 ersichtlich ist, steigt der Gasdruck D bei üblichen Ausführungen des Gasgenerators 26 zunächst steil an und erreicht bereits nach 0,75 ms ein Maximum von etwa 76 x 10⁶ Pa. Anschließend fällt der Druck D nahezu ebenso steil ab und hat nach etwa 2,5 ms nur noch einen Bruchteil von etwa 10% des maximal erreichten Gasdrucks. Nahezu die gesamte durch den Gasgenerator freigesetzte Energie ist also während einer kurzen Zeitspanne von 2 bis 3 ms verfügbar. Diese Zeitspanne ist erheblich kürzer als die, welche der Kolben 24 benötigt, um die Wegstrecke von beispeilsweise 250 mm bis zum Ende des Zylinders 22 zurückzulegen.

Bei dem erfindungsgemäß ausgebildeten Linearantrieb, dessen erste Ausführungsform in Fig. 4 dargestellt ist, wird die von dem Kolben 24 aufgeübte Kraft nicht unmittelbar, sondern über eine Dämpfungseinrichtung 32 auf das Zugseil 12 übertragen. Diese Dämpfungseinrichtung 32 ist durch mehrere Tellerfedern gebildet, die auf dem Ende des Zugseils 12 aufgereiht sind und sich einerseits auf der benachbarten Stirnfläche des Kolbens 24 und andererseits an einem auf das Ende des Zugseils 12 fest aufgepreßten Anschlagteil 34 abstützen. Bei der Aktivierung des Gasgenerators 26, beispielsweise - wie in Fig. 4 angedeutet - mittels Schlagzündung, wird der Kolben 24 im Zylinder 10 vorgeschoben, wobei die Tellerfedern der Dämpfungseinrichtung 32 zusammengedrückt werden, sobald die Seilscheibe 14 über die Kupplung 16 drehfest an die Gurtspule 18 angekoppelt ist und das Zugseil 12 gespannt wird, da das Trägheitsmoment der Gurtspule 18 und des darauf aufgewickelten Gurtbandes 20 überwunden werden muß. Fig. 3 zeigt die Entwicklung der im Zugseil 12 aufgebauten Zugkraft F in Abhängigkeit von der zurückgelegten Wegstrecke s. Wie aus dem Diagramm ersichtlich ist, steigt die Kraft F in der Anfangsphase der Kolbenbewegung progressiv an. Die Gurtspule 18 wird nun durch die am Umfang der Seilscheibe 14 angreifende Kraft F in Drehung versetzt und erreicht bereits nach einer kurzen Bewegungsstrecke des Kolbens von etwa 16 mm eine extrem hohe Drehzahl.

Das Diagramm in Fig. 1 zeigt auch den Verlauf der Beschleunigung G des Kolbens 24 in Abhängigkeit von der Zeit t. Auffällig ist in dem Diagramm, daß die Kurve G einen ähnlichen Verlauf wie die Kurve D aufweist und insbesondere ihr Scheitel ebenfalls bei etwa 0,75 ms erreicht ist. Der Gasdruck D wird also in optimaler Weise in Beschleunigung des Kolbens 24 umgesetzt. Die Dämpfungseinrichtung ist während der gesamten Anfangsphase der Kolbenbewegung bis etwa 1 ms wirksam.

Ebenfalls in dem Diagramm der Fig. 1 dargestellt ist die Wegstrecke s, die der Kolben 24 in Abhängigkeit von der Zeit t zurücklegt. Den größten Teil der Wegstrecke bis zum Ende des Zylinders 10, beispielsweise insgesamt etwa 200 mm, legt der Kolben mit geringer Druckbeaufschlagung zurück. Nach Ablauf von etwa 2,5 bis 3 ms fliegt der Kolben 24 aufgrund seiner Massenträgkeit im Zylinder 22 weiter. Durch Anbringen von Entlastungsbohrungen in der Wandung des Zylinders 10 etwa auf halber Höhe der Gesamtlänge desselben konnte nachgewiesen werden, daß der restliche Gasdruck D nur noch einen geringen Beitrag zur Strafferleistung erbringt. Die Gurtspule 18 setzt ihre Drehbewegung im wesentlichen aufgrund ihres Trägheitsmoments fort. Durch die erfindungsgemäße Dämpfungseinrichtung 32 wird erreicht, daß der Kraftverlauf (Fig. 3) optimiert ist, um eine optimale Speicherung der von dem Gasgenerator innerhalb von höchstens etwa 3 ms freigesetzten Energie in Form von mechanischer Rotationsenergie der Gurtspule 18 und des darauf aufgespulten Gurtbandes 20 zu gewährleisten. Die gespeicherte mechanische Energie reicht aus, um die Straffung des Gurtbandes mit dem gewünschten Strafferhub zu vollziehen.

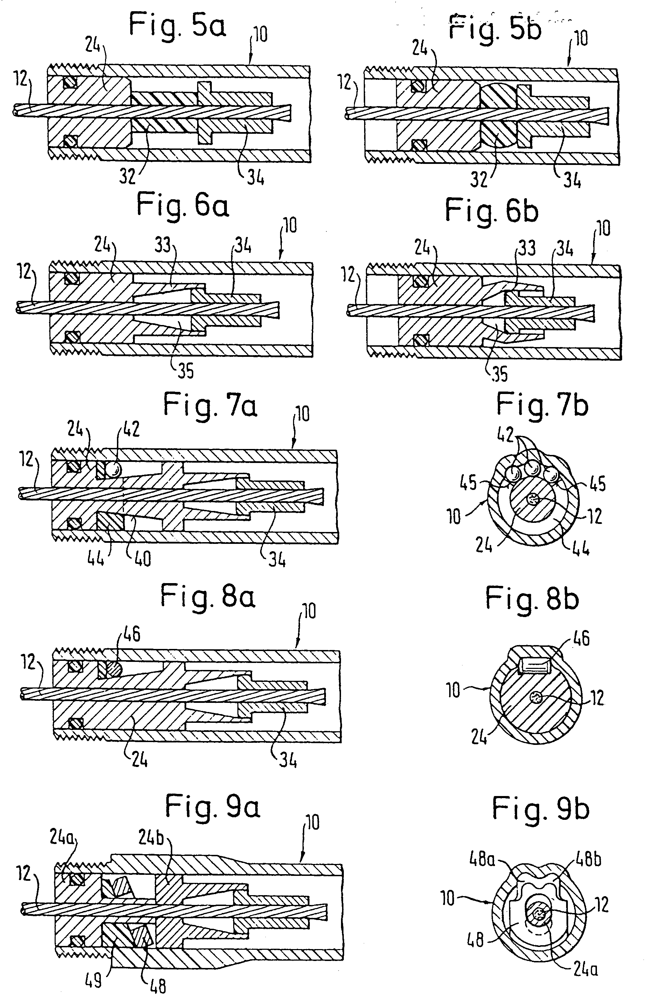

Zwei weitere Ausführungsformen der Dämpfungseinrichtung sind in den Figuren 5 und 6 dargestellt.

Bei der Ausführungsform nach Fig. 5 ist zwischen Kolben 24 und Anschlagteil 34 eine Dämpfungseinrichtung 32 in Form eines zylindrischen Körpers aus elastisch nachgiebigem Material mit einem axialen Durchgang für das Zugseil 12 angeordnet. Wie in Fig. 5b gezeigt, wird dieser Körper beim Ansteigen der Zugspannung im Zugseil 12 elastisch und zugleich plastisch verformt.

Bei der Ausführungsform nach Fig. 6 ist an den Kolben 24 auf dessen dem Anschlagteil 34 zugewandten Stirnseite eine Wandung 33 angeformt, deren Außenfläche zylindrisch ist und die einen kegelstumpfförmigen, mit dem Zylinder 10 koaxialen Raum 35 abgrenzt, welcher sich zum freien Ende der Wandung 33 hin aufweitet. Das Anschlagteil 34 dringt bei dem in Fig. 6a gezeigten Ruhezustand in das äußere Ende des Raumes 35 ein. Sobald nun die Zugkraft in dem Zugseil 12 ansteigt, wird das Anschlagteil 34 weiter in den Raum 35 hineingezogen, wobei die Wandung 33 gespreizt und plastisch verformt wird. Fig. 6b zeigt diesen Zustand.

Gemäß den in den Figuren 6a bis 9a dargestellten Ausführungsformen bildet eine im wesentlichen quer zum Zugseil verlaufende Platte den Spreizkörper des Anschlagteils 34 für die Wandung 33. Die Kanten an der auf die Wandung 33, die plastisch verformt wird, gerichteten Seite der Platte sind abgerundet. Der Radius der Rundung beträgt etwa 1 mm, kann aber auch etwa 1 bis 2 mm betragen.

Bei beiden Ausführungsformen (Fig. 5 und 6) wird prinzipiell der in Fig. 3 gezeigte Kraftverlauf erreicht. Je nach Ausführung der Dämpfungseinrichtung kann der Verlauf der Kraft F in Abhängigkeit von der Wegstrecke s aber variieren; durch Dimensionierung der Dämpfungseinrichtung ist in jedem Fall eine Optimierung des Kraftverlaufes dahingehend möglich, daß die von dem Gasgenerator innerhalb von kurzer Zeit freigesetzte Energie optimal an einen Straffermechanismus übergeben werden kann, um dort als mechanische Energie gespeichert zu werden und über einen längeren Zeitraum für die Straffung des Gurtbandes zur Verfügung zu stehen.

Bei der Ausführungsform nach Fig. 7, die prinzipiell mit der nach Fig. 6 übereinstimmt, ist am Kolben 24 durch eine Einschnürung eine kegelstumpfförmige Rampenfläche 40 gebildet, an deren tiefstem Teil auf nur einer Seite des Kolbens 24 drei Kugeln 42 durch ein Führungsteil 44 aus elastischem Material in Anlage an der Innenseite des Zylinders 10 gehalten werden. Wie aus Fig. 7b ersichtlich ist, weist das Führungsteil 44 zwei Schultern 45 auf, durch die die Kugeln 42 auf der genannten Seite des Kolbens 24 gehalten werden. Auf der radial gegenüberliegenden Seite stützt sich der Koblen 24 gleitend an der Innenseite des Zylinders 10 ab. Bei der Bewegung des Kolbens 24 unter der Wirkung des vom Gasgenerator erzeugten Gasdrucks widersetzen sich die Kugeln 42 nicht dieser Bewegung. Sobald am Ende des Rückstrammhubes durch den Zug im Zugseil 12 eine Umkehr der Bewegungsrichtung des Kolbens 24 eintritt, werden die Kugeln 42, die nunmehr als Sperrkugeln wirken, mit der Wandung des Zylinders 10 in Eingriff gebracht, da sie durch die Rampenfläche 40 radial auswärts gedrückt werden. Bei Weiterbewegung des Kolbens 24 dringen die Kugeln 42 in das Material der Wandung des Zylinders 10 ein und verformen dieses plastisch. Fig. 7b zeigt diesen Zustand. Die Anordnung wirkt im Anschluß an die Gurtstraffung als Energiewandler, der Lastspitzen im Gurtsystem abbaut. Durch die Verwendung nur weniger Kugeln werden elastische Verformungen des Zylinders 10 vermieden, die zu einer unstetigen Energiewandlung und zum Auftreten von Lastschwankungen im Gurtsystem führen würden. Solange die über das Zugseil 12 eingeleiteten Kräfte einen Wert von etwa 5000 N nicht überschreiten, was gerade in Verbindung mit einem optimal wirkenden Gurtstraffer erreicht werden kann, sollte die Energiewandlung mit nur wenigen Deformationselementen erfolgen, damit jedes von ihnen mit einer relativ großen Tiefe in das Material der Zylinderwandung eindringt.

Bei der Ausführungsform nach Fig. 8 wird anstelle der drei Kugeln in Fig. 7 eine Walze 46 verwendet, die an ihren stirnseitigen Enden mit einer Verrundung versehen ist, so daß sie sanft und ohne spanende Bearbeitung in das Material der Zylinderwandung eindringen kann. Die Wirkungsweise ist prinzipiell die gleiche wie bei der Ausführungsform nach Fig. 7.

Bei der Ausführungsform nach Fig. 9 ist der Kolben in zwei Kolbenteile 24a, 24b aufgeteilt, die im axialen Abstand voneinander auf dem Zugseil 12 lose aufgereiht sind. In dem Raum zwischen den Kolbenteilen 24a, 24b ist eine Platte angeordnet, die bei dem in Fig. 9a gezeigten Ruhezustand unter einem Winkel von etwa 30° zur Achse des Zylinders 10 geneigt ist. Die Platte 48 stützt sich an ihrem einen Ende gleitend an der Innenseite des Zylinders 10 ab und ist an ihrem radial gegenüberliegenden Ende mit zwei Deformierungsgliedern 48a, 48b versehen. Ein keilförmiges Führungsteil 49 hält die Platte 48 mit ihren Deformierungsgliedern 48a, 48b elastisch an der Innenseite des Zylinders 10 in Anlage.

Die Platte 48 widersetzt sich nicht der Bewegung des Kolbens 24a, 24b zur Straffung des Gurtbandes; bei der entgegengesetzten Bewegung richtet sie sich auf, so daß die Deformierungsglieder 48a, 48b in das Material der Wandung des Zylinders 10 eindringen und dieses plastisch verformen. Dieser Zustand ist in Fig. 9b gezeigt. Die Wirkungsweise ist prinzipiell dieselbe wie bei den Ausführungsformen nach den Figuren 7 und 8.

## Patentansprüche

1. Linearantrieb für Fahrzeug-Rückhaltesysteme, mit einem pyrotechnischen Gasgenerator (26), einer durch die von diesem erzeugten Gase aktivierbaren Kolben/Zylinder-Einheit (10) und einem Zugseil (12), das so an den Kolben (24) der Kolben/Zylinder-Einheit (10) angeschlossen ist, daß zwischen dem Kolben (24) und dem Zugseil (12) ein Kraftübertragungsweg geschaffen wird, der eine deformierbare Dämpfungseinrichtung (32) enthält, insbesondere für Gurtstraffer an einem Gurtaufroller, dadurch gekennzeichnet, daß die Dämpfungseinrichtung (32) so ausgelegt und dimensioniert ist daß sie die von dem Kolben (24) auf das Zugseil (12) bereits in der Phase des Druckanstiegs der Gase vor Erreichen des Druckmaximums ausgeübte Kraft begrenzt und stetig ansteigen läßt sowie während der gesamten Anfangsphase der Kolbenbewegung wirksam ist, in welcher der durch den Gasgenerator (26) erzeugte Gasdruck (D) ansteigt.

2. Linearantrieb nach Anspruch 1, dadurch gekennzeichnet, daß der Gasgenerator (26) einen Gasdruck (D) erzeugt, der nach Zündung steil ansteigt, innerhalb von etwa 0,5 bis 1 ms nach der Zündung sein Maximum erreicht hat, anschließend wieder abfällt und etwa 3 ms nach der Zündung auf weniger als 10% seines Maximalwertes abgesunken ist.

3. Linearantrieb nach Anspruch 1 oder 2, dadurch gekennzeichnet, daß die Wegstrecke (s) des Kolbens (24), auf welcher die Dämpfungseinrichtung (32) wirksam ist, etwa 5 bis 15% des gesamten Kolbenhubes beträgt.

4. Linearantrieb nach einem der vorstehenden Ansprüche, dadurch gekennzeichnet, daß die während der Wirksamkeit der Dämpfungseinrichtung (32) von dem Kolben (24) auf das Zugseil (12) übertragene Kraft (F) progressiv mit der zurückgelegten Wegstrecke (s) zunimmt.

5. Linearantrieb nach einem der vorstehenden Ansprüche, dadurch gekennzeichnet, daß der Kolben (24) mit einer axialen Bohrung versehen ist, durch die ein Ende des Zugseils (12) ohne Befestigung an dem Kolben (24) hindurchgeführt ist, daß auf dem Ende des Zugseils (12) ein Anschlagteil (34) in axialem Abstand von dem Kolben (24) befestigt ist und daß die Dämpfungseinrichtung (32) zwischen dem Anschlagteil (34) und der diesem zugewandten Stirnfläche des Kolbens (24) angeordnet ist.

6. Linearantrieb nach Anspruch 5, dadurch gekennzeichnet, daß die Dämpfungseinrichtung (32) durch einen mit einem Durchgang für das Zugseil (12) versehenen Körper aus elastisch und/oder plastisch verformbarem Material gebildet ist.

7. Linearantrieb nach Anspruch 5, dadurch gekennzeichnet, daß die Dämpfungseinrichtung (32) durch eine das Zugseil (12) umgebende Federeinrichtung gebildet ist.

8. Linearantrieb nach Anspruch 7, dadurch gekennzeichnet, daß die Federeinrichtung (32) durch mehrere auf dem Zugseil (12) aufgereihte Tellerfederelemente gebildet ist.

9. Linearantrieb nach Anspruch 5, dadurch gekennzeichnet, daß die Dämpfungseinrichtung (32) durch ein plastisch verformbares Teil (33) gebildet ist, das allgemein axial verlaufende Wandungsteile aufweist, die bei Annäherung des Kolbens (24) an das Anschlagteil (34) in Radialrichtung verformt werden.

10. Linearantrieb nach Anspruch 9, dadurch gekennzeichnet, daß das plastisch verformbare Teil (33) allgemein becherförmig ist und mit seiner zylindrischen Umfangswandung einen kegelstumpfförmigen Raum (35) bildet, in den bei Annäherung des Kolbens (24) an das Anschlagteil (34) ein an diesem gebildeter Spreizkörper eindringt.

11. Linearantrieb nach Anspruch 10, dadurch gekennzeichnet, daß das becherförmige Teil (33) an der dem Anschlagteil (34) gegenüberliegenden Stirnfläche des Kolbens (24) angeformt und der Spreizkörper einstückig mit dem Anschlagteil (34) ausgebildet ist.

12. Linearantrieb nach Anspruch 10 oder 11, dadurch gekennzeichnet, daß eine im wesentlichen quer zum Zugseil (12) verlaufende Platte den Spreizkörper bildet, deren Kanten an der auf das plastisch verformbare Teil (33) gerichteten Seite abgerundet sind.

13. Linearantrieb nach Anspruch 12, dadurch gekennzeichnet, daß der Radius der Kantenabrundungen etwa 1 mm bis 2 mm beträgt.

14. Linearantrieb nach einem der vorstehenden Ansprüche, dadurch gekennzeichnet, daß am Kolben (24) wenigstens ein Deformationsglied (42; 46; 48) angeordnet ist, welches bei der Bewegung des Kolbens (24) in einer Richtung, die zu der Richtung der Kolbenbewegung bei Aktivierung des Gasgenerators (26) entgegengesetzt ist, die Wandung des Zylinders (10) plastisch verformt.

15. Linearantrieb nach Anspruch 14, dadurch gekennzeichnet, daß das wenigstens eine Deformationsglied auf nur einer Seite des Kolbens (24) angeordnet ist, der mit seiner radial gegenüberliegenden Seite gleitend an der Innenseite der Zylinderwandung abgestützt ist.

## Claims

1. A linear drive for vehicle restraining systems, comprising a pyrotechnical gas generator (26), a piston/cylinder unit (10) which is activatable by the gases generated by said gas generator (26), and a pulling cable (12) which is so connected to said piston (24) of said piston/cylinder unit (10) that a force transmission path is formed between said piston (24) and said pulling cable (12), said force transmission path comprising a deformable damping means (32) in particular for belt pretensioners on a belt retractor, characterized in that said damping means (32), is so constructed and dimensioned that it limits the force exerted by the piston (24) on the pulling cable (12) already in the phase of pressure rise of the gases prior to reaching a pressure maximum and allows said force to rise continuously, said damping means being effective during the entire initial phase of the piston movement in which the gas pressure (D) generated by the gas generator (26) rises.

2. Linear drive according to claim 1, characterized in that the gas generator (26) generates a gas pressure (D) which after ignition rises steeply, within about 0.5 to 1 ms after ignition has reached its maximum, thereafter drops again and about 3 ms after the ignition has dropped to less than 10 % of its maximum value.

3. Linear drive according to claim 2, characterized in that the travel (s) of the piston (24) along which the damping means (32) is effective, is about 5 to 15 % of the total piston travel.

4. Linear drive according to any one of the preceding claims, characterized in that the force (F) transmitted by the piston (24) to the pulling cable (12) during the effectiveness of the damping means (32) increases progressively with the travel (s) covered.

5. Linear drive according to any one of the preceding claims, characterized in that the piston (24) is provided with an axial bore through which one end of the pulling cable (12) is led without securing to the piston (24), that on the end of the pulling cable (12) a stop member (34) is secured at an axial distance from the piston (24) and that the damping means (32) is arranged between the stop member (34) and the end face of the piston (24) facing said member.

6. Linear drive according to claim 5, characterized in that the damping means (32) is formed by a body of resiliently and/or plastically deformable material provided with a passage for the pulling cable (12).

7. Linear drive according to claim 5, characterized in that the damping means (32) is formed by a spring means surrounding the pulling cable (12).

8. Linear drive according to claim 7, characterized in that the spring means is formed by a plurality of plate spring elements arranged in series on the pulling cable (12).

9. Linear drive according to claim 5, characterized in that the damping means (32) is formed by a plastically deformable member (33) which has generally axially extending wall portions which are deformed in the radial direction when the piston (24) approaches the stop member (34).

10. Linear drive according to claim 9, characterized in that the plastically deformable member (33) is generally cup-shaped and with its cylindrical peripheral wall forms a frustoconical space (35) into which, when the piston (24) approaches the stop member (34), an expanding body formed on the latter penetrates.

11. Linear drive according to claim 10, characterized in that the cup-shaped member is integrally formed on the end face of the piston (24) opposite the stop member (34) and the expansion body is integrally formed with the stop member (34).

12. Linear drive according to claim 10 or 11, characterized in that plate extending substantially transversely to the pulling cable (12) forms the expansion body, its edges on the side directed to the plastically deformable member (33) being rounded.

13. Linear drive according to claim 12, characterized in that the rounded edges is approximately 1 mm to 2 mm.

14. Linear drive according to any one of the preceding claims, characterized in that on the piston (24) at least one deformation member (42; 46; 48) is arranged which on movement of the piston (24) in a direction opposite to the direction of the piston movement on activation of the gas generator (26) plastically deforms the wall of the cylinder (10).

15. Linear drive according to claim 14, characterized in that at least one deformation member is arranged on only one side of the piston (24), the latter bearing with its radially opposite side slidingly on the inner side of the cylinder wall.

## Revendications

1. Mécanisme d'entraînement linéaire pour des systèmes de retenue de passagers dans des véhicules, comprenant un générateur de gaz pyrotechnique (26), un dispositif à piston et cylindre (10), gui peut être actionné par les gaz produits par ce générateur, et un câble de traction (12), gui est raccordé au piston (24) du dispositif (10) à piston et cylindre, de telle sorte cu'entre le piston (24) et le câble de traction (12) il soit créé une transmission de force, qui contienne un dispositif d'amortissement déformable (32), en particulier pour le raidisseur de la sangle sur un enrouleur de ceinture, caractérisé en ce que le dispositif d'amortissement (32) est conçu et est dimensionné d'une manière telle qu'il limite la force exercée par le piston (24) sur le câble de traction (12) déjà dans la phase de l'augmentation de pression des gaz avant d'atteindre le maximum de pression, et la fasse croître constamment et soit opérationnel pendant toute la phase initiale du déplacement du piston durant laquelle la pression (D) du gaz, produite par le générateur de gaz (26), augmente.

2. Mécanisme d'entraînement linéaire selon la revendication 1, caractérisé en ce que le générateur de gaz (26) produit une pression gazeuse (D), qui augmente de façon abrupte après l'allumage, atteint son maximum dans un délai d'environ 0,5 à 1 ms après l'allumage, retombe ensuite et s'est abaissée à moins de 10% de sa valeur maximale environ 3 ms après l'allumage.

3. Mécanisme d'entraînement linéaire selon la revendication 1 ou 2, caractérisé en ce que le trajet (s) du piston (24), sur lequel le dispositif d'amortissement (32) est opérationnel, atteint environ 5 à 15 % de la course totale du piston.

4. Mécanisme d'entraînement linéaire selon l'une des revendications précédentes, caractérisé en ce que la force (F), qui est transmise par le piston (24) au câble de traction (12) pendant le fonctionnement du dispositif d'amortissement (32), augmente progressivement avec le trajet (s) parcouru.

5. Mécanisme d'entraînement linéaire selon l'une des revendications précédentes, caractérisé en ce que le piston (24) est pourvu d'un alésage axial, à travers lequel on fait passer une extrémité du câble de traction (12) sans fixation sur le piston (24), en ce qu'à l'extrémité du câble de traction (12) on fixe une pièce de butée (34) à distance axiale du piston (24), et en ce que le dispositif d'amortissement (32) est disposé entre la pièce de butée (34) et la face frontale du piston (24), qui est tournée vers cette pièce de butée.

6. Mécanisme d'entraînement linéaire selon la revendication 5, caractérisé en ce que le dispositif d'amortissement (32) est formé par un corps en une matière élastiquement et/ou plastiquement déformable, qui est pourvu d'un passage pour le câble de traction (12).

7. Mécanisme d'entraînement linéaire selon la revendication 5, caractérisé en ce que le dispositif d'amortissement (32) est formé par un dispositif à ressort, qui entoure le câble de traction (12).

8. Mécanisme d'entraînement linéaire selon la revendication 7, caractérisé en ce que le dispositif à ressort (32) est formé par plusieurs éléments de ressort à disques rangés sur le câble de traction (12).

9. Mécanisme d'entraînement linéaire selon la revendication 5, caractérisé en ce que le dispositif d'amortissement (32) est formé par une pièce plastiquement déformable (33) qui présente des parties de paroi s'étendant de façon générale axialement, qui sont déformées dans le sens radial quand le piston (24) se rapproche de la pièce de butée (34).

10. Mécanisme d'entraînement linéaire selon la revendication 9, caractérisé en ce que la pièce plastiquement déformable (33) a la forme générale d'une coupe et forme avec sa paroi périphérique cylindrique un espace (35) en forme de tronc de cône, dans lequel pénètre un corps d'écartement, qui est constitué sur la pièce de butée (34), quand le piston (24) se rapproche de celle-ci.

11. Mécanisme d'entraînement linéaire selon la revendication 10, caractérisé en ce que la pièce (33), en forme de coupe, est formée sur la face frontale du piston (24), qui est située en regard de la pièce de butée (34), et en ce que le corps d'écartement est constitué d'un seul morceau avec la pièce de butée (34).

12. Mécanisme d'entraînement linéaire selon la revendication 10 ou 11, caractérisé en ce que le corps d'écartement est formé par une plaque, qui s'étend de façon sensiblement perpendiculaire au câble de traction (12), plaque dont les bords sont arrondis sur le côté orienté vers la partie déformable plastiquement (33).

13. Mécanisme d'entraînement linéaire selon la revendication 12, caractérisé en ce que le rayon des arrondis des bords atteint environ 1 à 2 mm.

14. Mécanisme d'entraînement linéaire selon l'une des revendications précédentes, caractérisé en ce que l'on dispose sur le piston (24) au moins un organe de déformation (42; 46; 48), qui déforme plastiquement la paroi du cylindre (10), lors du déplacement du piston (24) dans une direction qui est opposée à la direction du déplacement du piston lors de l'actionnement du générateur de gaz (26).

15. Mécanisme d'entraînement linéaire selon la revendication 14, caractérisé en ce que ledit au moins un organe de déformation est disposé sur seulement un côté du piston (24), qui prend appui par son côté situé radialement en regard de façon glissante sur la face intérieure de la paroi du cylindre.
